# EUROPEAN PATENT APPLICATION

(11) **EP 0 691 444 A1**
(43) Date of publication of application: **10.01.1996**
(21) Application number: 94500120.4
(22) Date of filing: 06.07.1994
(51) Int. Cl.: E04H 7/28

(54) **Prefabricated modular bulk Silo**

(71) Applicant: Perez-Manglano Soto, Julio, E-46006 Valencia (ES)
(72) Inventor: Toran Domiguez, Gonzalo,, E-46006 Valencia (ES); Perez-Manglano Soto, Julio, E-46006 Valencia (ES)
(74) Representative: Carpintero Lopez, Francisco

(57) **Abstract**

The silo is based upon having its enclosure or wall constituted by joining a number of prefabricated individual panels (3) lying side by side, forming a broken pattern that adjusts to regular or irregular polygonal shapes. These panels (3) are constructed by means of a reinforced concrete block (7) which is perimetrically reinforced by means of a reinforcement based on U-shaped sections (9) through which the union with adjacent panels (3) takes place precisely to form the silo enclosure, which union can take place through the edges defined by the sections (9) or through the middle branch, in accordance with the position of the panels (3) to each other. The union elements as such can be continuous or broken, and hence the union can be deemed to be rigid or flexible. The panels (3) can be anchored to the respective foundations (1) through plates (2) which may be isolated or continuous (2'), the side edges of two adjacent panels (3) meeting at such plates (2). The side wall of the silo is finally provided at the top with an upper enclosure (14) comprising a spatial three-dimensional prefabricated structure, which acts as a strong upper banding.

The silo is easy to assemble and dismantle and can for instance be used in harbours to act as a bridge warehouse between freighters and transport vehicles, and can also be used in the field of farming for storing cereals.

## Description

### OBJECT OF THE INVENTION

The present invention relates to a prefabricated modular silo for commodities in bulk, namely pulverulent and granular products such as cement, cereals and the like, the silo having in particular been designed to be easily assembled and dismantled, and to easily adapt to several capacities precisely due to its modular nature, with variable height and plan arrangement.

Structurally, the silo relies on the use of prefabricated reinforced concrete panels with a perimetric metal framework.

The silo can be used in places such as harbours serving as a bridge store between freighters and land or railway transport vehicles, or in general wherever pulverulent or granular products need to be stored, and serving as a buffer for a temporary store between production and consumption or sale, and is hence very useful and convenient in the field of farming to serve as a temporary store for cereals.

### BACKGROUND OF THE INVENTION

Two kinds of silo construction systems exist, using either masonry or metalwork. The main problem these two kinds of silos have lies in the cost of making the same, and the occasional dismantling and the considerable building work time.

In fact, masonry silos, generally built using a reinforced concrete wall, are inconvenient in the very high cost of building the forms, and further in that the silo obtained cannot be dismantled and, where it is to be used for the time being, must be demolished, with the ensuing costs and other problems and disadvantages.

As for metallic silos their enclosure and supporting the structures also entail a heavy cost.

It must also be borne in mind, as aforesaid, that where the land is leased or rented, as in some harbours, upon expiry of the set term the buildings erected must be pulled down and this cost must hence be added to the cost of building, with the added inconvenience that the parts of the silo left can hardly be used again.

A kind of silo based upon the use of phenolic panels supported by metallic trusses is also known, which is collapsible, but because its construction requires foundations, a number of uprights need to be provided which have a complex and specific arrangement of metallic sections, to suitably fix and arrange the phenolic panels that will enclose the contour of the silo, and as we were saying, the metallic uprights render the silo expensive to manufacture or construct, and to assemble and dismantle.

### DESCRIPTION OF THE INVENTION

The silo subject hereof has been designed to fully solve the problems traditionally associated to the performance of such works, whilst preserving a perfect functionality and considerable aesthetics.

In particular, the silo of the invention is based upon a modular enclosure system using prefabricated individual panels joined to each other to form a broken line resembling regular or irregular polygonal shapes, or indeed forming curved lines, and may also be constructed as double silos in which two silos are attached to each other, sharing a wall in part.

Every prefabricated panel is made as a reinforced concrete parallelepiped, the contour being provided with a perimetric reinforcement using steel sections which are useful for the unit as a whole, the union of the panel reinforcement and the union of the panels to each other to perform better structurally, since these perimetric reinforcements comprise a UPN type section on either side of the contour of the panel itself, with the concavity facing inwards, the perimetric sections joining one another to have the reinforced concrete block located within the reinforcement constituted by the sections joined to each other.

This union between panels to define the enclosure of the silo can be made using continuous or broken elements, whence the union can be deemed to be rigid or flexible, and in this sense such union can rely upon a continuous or other weld bead, continuous or other metallic sections, brackets, hinges, screwdown unions, additional external structures or otherwise howsoever, the common feature being that the panels are all attached to the respective foundations using a bracket where the edges or borders of two adjacent panels meet, which bracket can otherwise be continuous along the entire perimeter.

The silo is finally provided at its uppermost portion with an enclosure based upon three-dimensional prefabricated spatial structures, which enclosure will moreover be useful as a strong upper banding.

With the silo being described it will moreover be possible to easily adapt to the required capacity conditions and the planning limitations that may be prescribed, since the variables with which the desired capacity can be achieved (number of silos, height and plan arrangement) so allow.

Another advantage of the silo of the invention lies in the building time which is greatly diminished given the use of prefabricated panels built on site or in plant, ready to be fitted, which are particular in that their modular nature and assembling system allow the silo to be easily and rapidly dismantled, where necessary, and the elements used can almost fully be recycled.

The purity of forms that is achieved with the materials used in manufacturing the silo and the reduction of the infrastructures required for the necessary and inevitable foundations of the silo is also extremely important.

As for prefabricated panels used in enclosing the silo, it has already been said that they will be shaped as a parallelepiped and the panels can be long and have a straight or other cross-section, viz. they may be curved and indeed the cross-section can be variable though they will preferably in most cases be the same and prefabricated, their dimensions being variable to adjust to the needs of the silo.

The panels can be arranged howsoever and as may be required from time to time to define the enclosure, the perimeter forming a broken polygonal line around the silo on the imaginary middle perimeter, which may be circular or polygonal, regular or irregular, the said arrangement of the panels providing the silo as such with sufficient rigidity and stability.

As for joining the panels to each other to form the enclosure, this can take place through their vertical adjacent edges, in such a way as to attain a good initial imperviousness, the above in order for this union between panels to be achieved using the vertical planes, one on each adjacent panel, meeting at the said intersecting edge, allowing the desired longitudinal union of panels to be take place, these unions to be made by means of systems adapted to every angle and type of panel, for the closed and broken polygonal line on which the panels at issue are arranged need not have identical angles throughout.

In other words, the arrangement of the panels allows the same to be placed at any dihedral angle between the same, although the arrangement that best expedites assembly is that in which the panels are locate laid at 90° angles.

The inertia of the wall will obviously be the greater the larger its overall width, and hence this dimension may be varied to optimise the overall cost of the work, including the foundations.

As for erecting the silo, such can be achieved with a single series of panels of suitable height, or by assembling several panels arranged on each other, and hence the geometric and constructive conditions of the panels may be varied within the range of possible combinations to best suit the constructive typology to the mechanical stress.

In particular, the broken polygonal contours will be convenient where octagonal and indeed hexagonal, having especially good assembling qualities because of the value of the angles the panels must form.

Though the silo is structurally stable, enveloping bands can be provided to join the perimetric sections forming a ring which increases the rigidity of the unit, which bands can be external, in which case they can be constructed as cables, post-tensioned or not, or with tensile strong elements, or internal, using compression strong elements. It is also possible to use tensors inside the silo, post-tensioned or not, arranged between facing panel unions at the centre of the silo.

The panels forming the enclosures offer a wide range of finishes, colours, textures, allowing any outer surface aesthetics, being particular in that to enhance the imperviousness of the enclosure and for the silo to be waterproof, the length of the leading edge between panels can be sealed with resilient cement or laying down polymers.

The spatial covering structure, made of steel, concrete, wood and so forth, shall be supported directly or indirectly on the surface defined by the upper face of the panels, the cover being designed as an upper tying band affording resistance.

It finally remains to be said that the silo shall have load mouths distributed at regular intervals on the top supported on the structure itself, for the silo to be filled, and means allowing the product stored therein to be removed, which means will naturally be located at its lower or bottom area.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

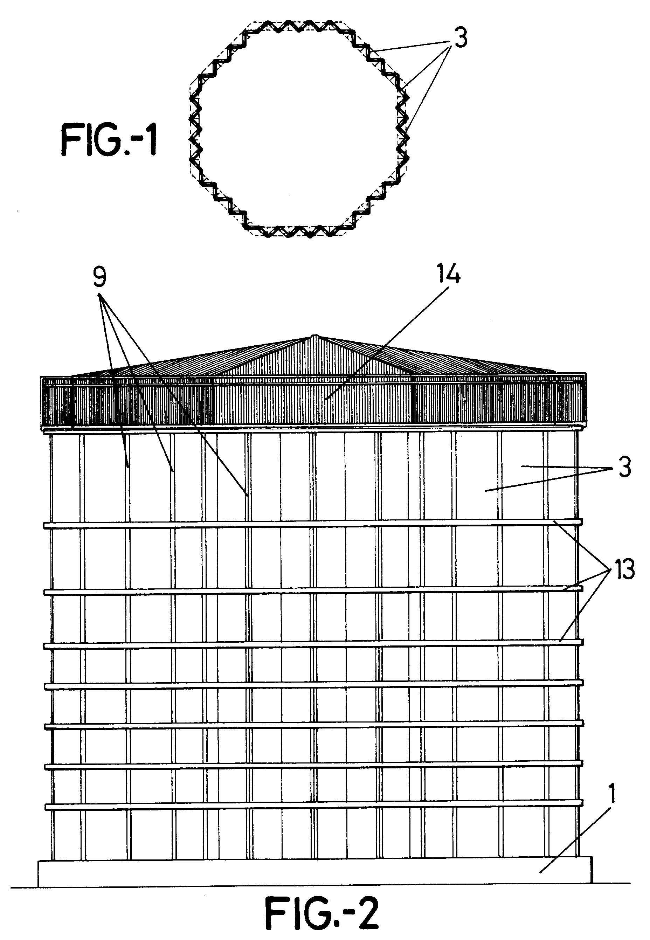

Figure 1.- Is a schematic plan view of the broken perimeter of an octagonal plan silo.
Figure 2.- Is an elevation view of a silo made in accordance with the object of the invention.

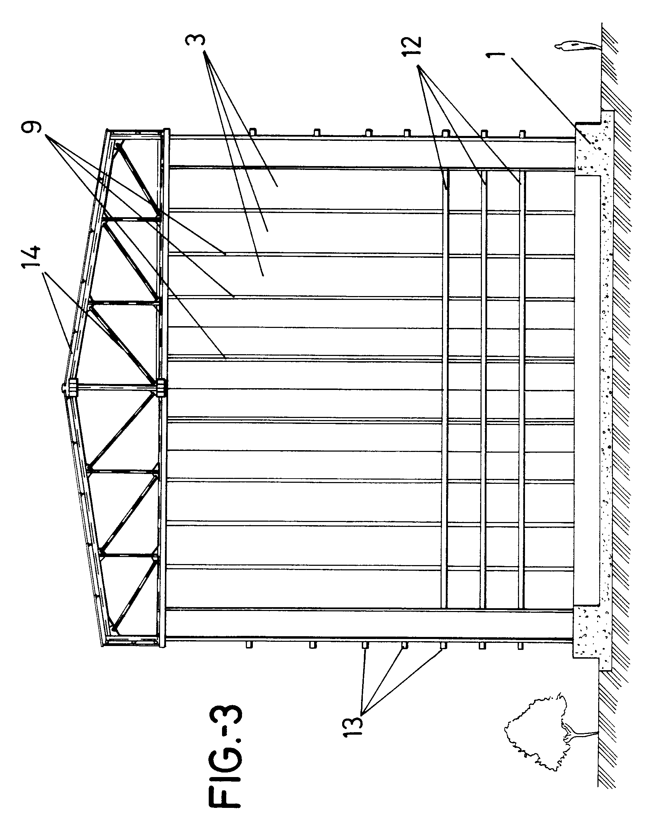

Figure 3.- Is a vertical plane sectional view of the same silo shown in the previous figure.
Figure 4.- Is an axonometric perspective view of a part of an octagonal plan double silo.
Figure 5.- Is an elevation schematic view of a prefabricated panel used as a basic element in the enclosure of the silo subject of the invention.
Figure 6.- Is a cross-section of the prefabricated panel shown in the previous figure.
Figure 7.- Is a close-view of the anchorage and union to each other of two adjacent panels lying at a 90° angle to each other.
Figure 8.- Is another close-view of the union between panels, in this case of three panels lying at 90° angles to each other.
Figure 9.- Is a broken arrangement of several panels joined to each other along a curved line.
Figure 10.- Is a schematic plan close-view of mixed panels, viz. being curved in part and straight in part, joined to each other along a winding line, with the respective lower clamp plates.
Figure 11.- Finally shows a schematic plan view of the union to each other of panels at an angle upon a continuous plate.

### PREFERRED EMBODIMENT OF THE INVENTION

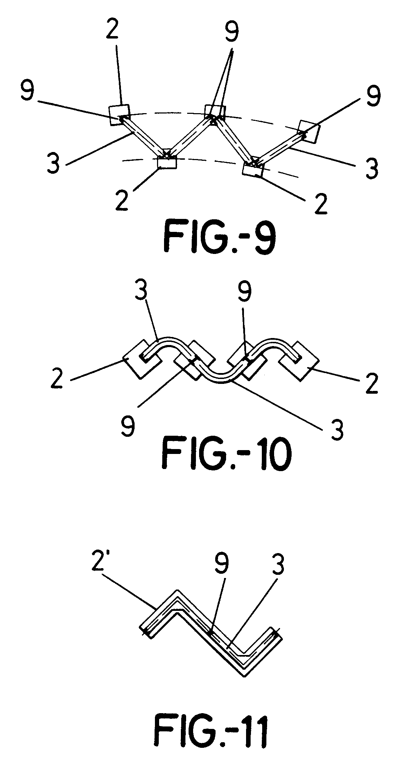

The said figures show that the prefabricated silo of the invention is mounted upon foundations (1) duly established on the ground on which a number of plates (2), which may be individual or continuous plates as in (2') of figure 11 are laid down, in such a way that such plates (2) or (2') are arranged along a broken line that shall define a perimeter being that of the silo to be obtained, which broken line can be regular or irregular and the polygon can also have a variable number of sides and indeed be regular or irregular, even having a wholly closed curved line.

In any event, the enclosure of the silo is carried out using a number of prefabricated modular panels (3) in a zigzag arrangement, which is the aforesaid broken line. In other words, the side walls of the silo are formed by the number of adjacent panels (3) lying at an angle to each other, leaving a triangular notching and bevels along the upper portion of the enclosure, on both the inner and the outer face, the value of the said angle depending on the arrangement of such panels (3).

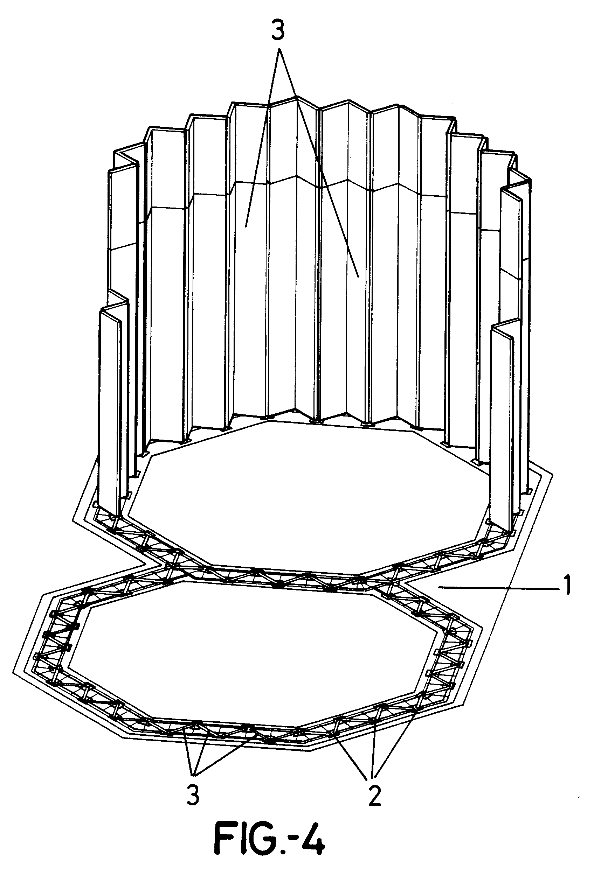

Figure 4 shows that the panels (3) can be simple and cause the silo to reach a particular height, or else be arranged on each other thereby to increase the height of the actual silo, all in accordance with the needs and logically in accordance with the length of the panels (3) that are to make up the silo walls.

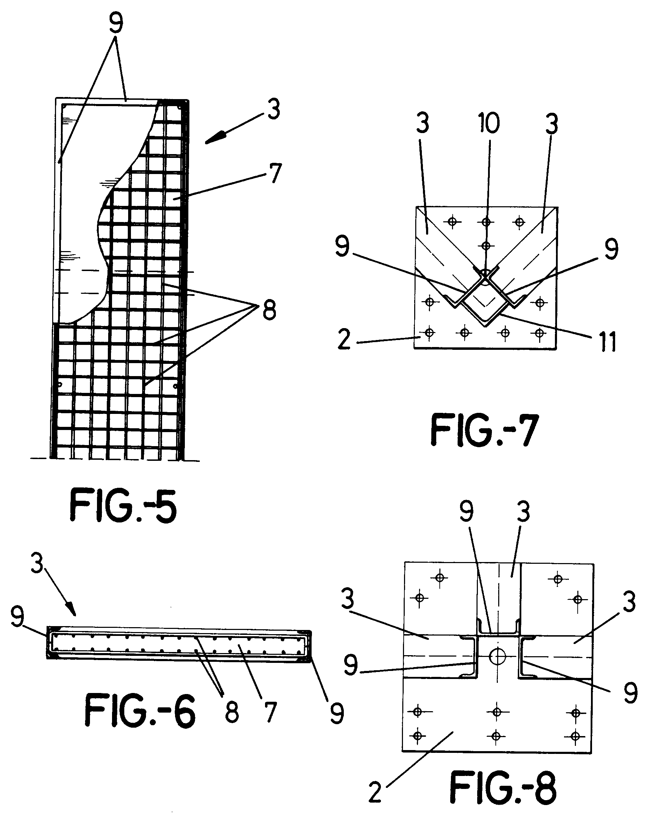

Each panel (3), as shown in figures 5 and 6, is made up of a reinforced concrete block (7), being straight or curved, as shall be explained hereinafter, the same having an internal reinforcement (9) based upon U-shaped steel sections with inwardly facing concavities, thus clamping the whole perimeter of the reinforced concrete block (7), being particular in that since the sections constituting the external reinforcement (9) are joined to each other, the same provide a strong structure that will moreover be useful as a means for joining adjacent panels to each other. The reinforcement (8) of the panel can be fixed by welding to the actual sections making up the perimetric reinforcement (9).

Figures 7 and 8 show that the panels (3) can be joined to each other through two facing edges on adjacent panels (3) which form a dihedral angle (10) with each other, as shown in figure 7, finally having an external stiffening section (11), or can be arranged at right angles to each other as shown in figure 8, which panels (3) may also be joined through the external faces of the sections (9) constituting the perimetric reinforcements of two adjacent panels.

The structure of the silo can optionally be stiffened at the relevant height with internal (12) or external (13) banding rings made of metallic or other strong material sections or elements, which may be post-tensioned, and internal post-tensioned or other tensors may also be provided.

The silo will finally be provided with an upper cover based upon a structurally cooperating spatial structure (14) forming a strong upper band.

Figure 9 shows an arrangement of panels (3) forming a broken pattern and lying along a curved line, which panels are joined to each other through their respective sections which represent the perimetric reinforcement (9).

Figure 10 shows the panels (3) as a mixed embodiment, viz. with curved parts and straight parts, likewise joined through the perimetric sections (9), forming a winding pattern, whereas figure 11 shows panels (3) with an angular conformation mounted upon a lower continuous plate (2').

## Claims

1. A prefabricated modular bulk silo, being provided to be assembled at places such as harbours, acting as a bridge warehouse between freighters and transport vehicles, or wherever certain pulverulent or granular products, such as cement or cereals, need to be stored for the time being, being moreover collapsible and easily adaptable for a wide range of capacities, being essentially characterised in that the wall or enclosure of the silo on the corresponding foundations (1) comprises the union to each other of a number of prefabricated modular panels (3), forming a broken zigzag, along a curved or straight line, and forming a regular or irregular polygon; being particular in that where the said panels (3) intersect, there are isolated (2) or continuous (2') plates duly attached to the corresponding foundations (1), which plates define the means for the anchorages of the various panels (3), the latter comprising a concrete block (7) with a reinforcement (8) and finally provided with a perimetric reinforcement (9) based on U-shaped sections to house the concrete block (7) as such on its entire inner contour.

2. A prefabricated modular bulk silo, as in claim 1, characterised in that the isolated plates (2) fixed upon the foundations (1), for the relevant panels (3) to be anchored, are arranged to form a closed broken line which constitutes the perimeter of the silo to be obtained, and hence where the plate (2') is continuous the broken line of the plate shall be as defined by the silo perimeter.

3. A prefabricated modular bulk silo, as in previous claims, characterised in that the union of the panels (3) to each other to define a structural continuity therebetween is made through the sections (9) corresponding to facing edges of two adjacent panels, this union being made through the edges of such sections (9), in the angular arrangement between panels (3), or through intermediate branches of such facing sections (9), in a continuous arrangement between panels (3), and the union means used can be elements such as brackets, weld beads, laminated sections, hinges, pivots, springs, bolts, screws and the like.

4. A prefabricated modular bulk silo, as in previous claims, characterised in that sectors of the enclosure or walls obtained with the panels (3) can be shared with other attached silos, to define a multiple silo upon the same foundations (1).

5. A prefabricated modular bulk silo, as in previous claims, characterised in that both inside and outside the panels (3) constituting the enclosure or wall of the silo, banding rings (12) and (13) can be provided, respectively constituted by metallic or other strong material sections or elements, post-tensioned or otherwise and/or internal tensors which may be post-tensioned.

6. A prefabricated modular bulk silo, as in previous claims, characterised in that the upper portion of the panels (3) constituting the enclosure or wall of the silo support a structurally cooperating spatial cover (14) that is duly fixed to it, conforming a strong upper band.

7. A prefabricated modular bulk silo, as in previous claims, characterised in that the prefabricated panels (3) can be straight, curved or mixed, defining a broken winding pattern along a straight or curved line at their union.
